# EUROPÄISCHE PATENTSCHRIFT

(11) **EP 3 378 701 B1**
(45) Veröffentlichungstag und Bekanntmachung des Hinweises auf die Patenterteilung: **13.05.2020**
(21) Anmeldenummer: 18161545.1
(22) Anmeldetag: 13.03.2018
(51) Int. Cl.: B60Q 1/14, B60Q 1/00

(54) **VERFAHREN UND VORRICHTUNG ZUR ANSTEUERUNG VON FERNLICHTFUNKTIONEN EINES KRAFTFAHRZEUGES**
METHOD AND DEVICE FOR CONTROLLING HIGH BEAM FUNCTIONS OF A MOTOR VEHICLE
PROCÉDÉ ET DISPOSITIF DE COMMANDE DES FONCTIONS DE FEUX DE ROUTE D'UN VÉHICULE AUTOMOBILE

(30) Priorität: 24.03.2017 DE 102017002881
(43) Veröffentlichungstag der Anmeldung: 26.09.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE)
(74) Vertreter: v. Bezold & Partner Patentanwälte - PartG mbB

(56) Entgegenhaltungen:
- DE-A1- 19 622 493
- DE-A1-102004 053 228
- DE-A1-102006 018 667
- DE-A1-102007 035 289
- DE-A1-102015 003 725
- DE-U1- 29 515 745

## Beschreibung

Die Erfindung betrifft ein Verfahren zur Ansteuerung von Fernlichtfunktionen eines Kraftfahrzeugs, insbesondere eines Nutzfahrzeugs. Die Erfindung betrifft ferner eine Vorrichtung zur Ansteuerung von Fernlichtfunktionen eines Kraftfahrzeuges.

Die Fernlichtfunktionen eines Kraftfahrzeugs umfassen eine manuell ein- und ausschaltbare Dauerfernlichtfunktion, eine Lichthupe und neuerdings ferner eine Fernlichtautomatikfunktion. Bei der aktivierten Fernlichtautomatik wird das Fernlicht im Fahrverlauf automatisch an- und ausgeschaltet. Verfahren und Vorrichtungen zur Ansteuerung von Fernlichtfunktionen eines Kraftfahrzeugs sind bekannt. In Kraftfahrzeugen, z. B. PKWs und Lastwägen erfolgt die Bedienung von Fernlicht, Lichthupe und Fernlichtautomatik meist anhand eines Lenkstockschalters.

Bei den aus der Praxis bekannten Lenkstockschalterausführungen in Bezug auf Lichtfunktionen sind oftmals bereits beide Betätigungsrichtungen des Lenkstockschalters belegt und können daher im Funktionsumfang nicht mehr zur Integration einer Fernlichtautomatikfunktion erweitert werden. Ferner ist aus der Praxis bekannt, dass eine einfache tastende oder rastende Schaltung des Lenkstockschalters vorgesehen ist, was eine Mehrfachbelegung beim Ziehen in eine Richtung erschwert. Ferner offenbart die DE 196 22 493 C5 eine automatische Fernlichtschaltung, bei der in Abhängigkeit der Lichtverhältnisse das Fernlicht automatisch an- und ausschaltbar ist. Ein manuelles An- und Ausschalten des Fernlichts erfolgt mittels eines Lenkstockhebels, der in Fahrtrichtung bzw. entgegen dieser verschwenkbar ist. Dabei entspricht ein geringes Verschwenken in Fahrtrichtung einer Lichthupen-Funktion, während durch Überwindung eines Druckpunkts ein Dauerbetrieb möglich ist. Durch anschließendes Verschwenken entgegen der Fahrtrichtung erfolgt eine manuelle Abschaltung. Dabei ist der genannten Druckschrift insbesondere nicht entnehmbar, wie und mit welcher Art von Bedienelementen sich die Automatikfunktion der vorbekannten Fernlichtschaltung aktivieren und deaktivieren lässt, wofür in der Regel ein eigenes zusätzliches Betätigungselement vorzusehen sein wird, was den Bedienkomfort reduziert und den konstruktiven Aufwand erhöht.

Die Offenlegungsschrift DE 10 2005 038 805 B4 schlägt ein Bedienkonzept vor, bei dem ohne zusätzliche Bedienelemente und mit nur einem Lenkstockschalter eine vollautomatische Fernlichtschaltung realisierbar ist, wobei eine erwartungskonforme manuelle Bedienung, insbesondere die Lichthupen-Funktion auch bei aktivierter Automatikfunktion unverändert erhalten bleiben soll. Der Lenkstockschalter zur Schaltung der Fernlichtfunktionen besitzt eine monostabile Neutralstellung sowie eine erste Schaltstellung und eine zweite Schaltstellung, aus denen der Schalthebel selbsttätig in die mittig zwischen den ersten und zweiten Schaltstellungen angeordnete Neutralstellung zurückspringt. So wird beispielsweise vorgeschlagen, dass eine Rückkehr in Zustände mit aktiver Fernlichtautomatik sowohl durch Ziehen als auch durch Drücken möglich ist, somit durch zwei entgegengesetzte Bedienvorgänge. Das manuelle Einschalten des Fernlichts erfolgt durch eine drückende Betätigung und das manuelle Ausschalten des Fernlichts durch eine ziehende Betätigung. Die Lichthupenfunktion ist bei ausgeschaltetem Fernlicht ebenfalls durch eine ziehende Betätigung einschaltbar, somit durch die gleiche Betätigung, die bei eingeschaltetem Fernlicht zum Ausschalten des Fernlichts vorgesehen ist. Jedoch hat eine drückende Betätigung des Bedienelements bei eingeschaltetem Fernlicht keine Auswirkungen. Es wurde festgestellt, dass dieses Bedienkonzept für eine Bedienperson oftmals nicht einfach verständlich ist und anfällig für Fehlbedienungen ist. Ein Grund hierfür ist, dass gleiche Betätigungsvorgänge des Lenkstockschalters unterschiedliche Funktionen ansteuern können oder unterschiedliche Auswirkungen haben. So wird über den gleichen Bedienvorgang sowohl das Einschalten der Lichthupe als auch das Ausschalten des Fernlichts gesteuert. Ferner kann eine drückende Betätigung des Lenkstockschalters je nach Betriebszustand ein manuelles Einschalten des Fernlichts bewirken oder keine Wirkung haben.

DE 10 2004 053 228 A1 beschreibt die Integration einer Fernlichtautomatikfunktion in bekannte Schaltanordnungen zur Bedienung der Fernlichtfunktion durch einen Lenkstockschalter, wobei der Lenkstockschalter für die Funktionen Dauerfernlicht und Fernlichtautomatik Raststellungen aufweist, die gegenseitig durch Überwindung eines deutlich spürbaren Druckpunkts erreichbar sind und für die Aktivierung der Lichthupe mindestens eine Selbstrückholstellung an einem Druckpunkt oder einem Anschlag der Bedienebene dient.

DE 2015 003 725 A1 offenbart eine Scheinwerfereinrichtung für einen Kraftwagen, welche Lichtfunktionen einer Fernlichtfunktion und einer Abblendlichtfunktion aufweist mit einem monostabilen Bedienelement zum Einstellen der Lichtfunktionen, wobei durch ein Auslenken (ziehen) des monostabilen Bedienelements von einer Neutralstellung in eine erste Auslenkrichtung unabhängig von einer augenblicklich eingestellten Lichtfunktion die Fernlichtfunktion genauso lange einstellbar ist, wie das monostabile Bedienelement von der Neutralstellung in die erste Auslenkrichtung ausgelenkt ist.

DE 295 15 745 U1 beschreibt einen Kraftomnibus-Multifunktionsschalter mit zusätzlicher "Tippfunktion", zum Ein- bzw. Ausschalten des Warnblinklichts und neuer Kontaktbelegung von Lichthupe plus Fernlicht, wobei es möglich ist, jeweils durch "antippen" des Hebels die Warnblinkanlage Ein- bzw. Ausschalten zu können solange der Motor. Durch Federkraft wird dabei der Bedienarm immer wieder die Ausgangsstellung zurückgedrückt.

DE 10 2007 035 289 A1 betrifft ein Kraftfahrzeug umfassend eine Beleuchtungseinrichtung mit manuell zuschaltbarem Abblendlicht und Fernlicht sowie ein Assistenzsystem zum automatischen Wechseln zwischen Fernlicht und Abblendlicht in Abhängigkeit von erfassten Umgebungsinformationen, wobei lenkradseitig ein aus einer Mittenstellung durch Drücken und Ziehen bewegbarer Bedienhebel vorgesehen ist, über den das Assistenzsystem durch Drücken zuschaltbar ist und durch erneutes Drücken bei angeschaltetem Abblendlicht das Assistenzsystem unter Wechsel in den Betriebsmodus mit manuell zugeschaltetem Fernlicht abschaltbar ist.

DE 10 2006 018 667 A1 bezieht sich auf ein Kraftfahrzeug mit einem Fernlichtassistenzsystem zur automatischen Umschaltung zwischen einem Abblendlichtmodus und einem Fernlichtmodus, wobei ein zur Betätigung des Blinkers und des Fernlichts des Kraftfahrzeugs dienender Bedienhebel zur Aktivierung und Deaktivierung des Fernlichtassistenzsystems des Kraftfahrzeugs ein zusätzliches Tastelement aufweist.

Es ist somit eine Aufgabe der Erfindung, ein verbessertes Verfahren zur Ansteuerung von Fernlichtfunktionen eines Kraftfahrzeugs bereitzustellen, mit dem Nachteile aus dem Stand der Technik vermieden werden können. Es ist insbesondere eine Aufgabe der Erfindung, ein Verfahren zur Ansteuerung von Fernlichtfunktionen eines Kraftfahrzeugs bereitzustellen, das eine Ansteuerung einer Dauerfernlichtfunktion, einer Lichthupenfunktion und einer Fernlichtautomatik in ein Betätigungselement in einer Art und Weise integriert, die für eine Bedienperson leicht und intuitiv verständlich ist. Es ist ferner eine Aufgabe, eine Vorrichtung zur Ansteuerung von Fernlichtfunktionen eines Kraftfahrzeugs bereitzustellen, mit der Nachteile aus dem Stand der Technik vermieden werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Ansteuerung von Fernlichtfunktionen eines Kraftfahrzeuges bereitgestellt. Das Kraftfahrzeug kann ein Nutzfahrzeug, beispielsweise ein Lastkraftwagen und/oder ein Omnibus sein. Die Fernlichtfunktionen des Kraftfahrzeugs umfassen in an sich bekannter Weise eine manuell ein- und ausschaltbare Dauerfernlichtfunktion, nachfolgend auch als Dauerfernlicht bezeichnet, eine Lichthupe und eine Fernlichtautomatikfunktion, auch als Fernlichtautomatik oder Fernlichtassistenzfunktion bezeichnet. Bei der aktivierten Fernlichtautomatik wird das Fernlicht im Fahrverlauf automatisch an- und ausgeschaltet. Derartige Fernlichtautomatikfunktionen sind an sich bekannt, um z. B. in Abhängigkeit von einem Steuersignal eines Lichtsensors und/oder von anderen Umgebungsparametern, z. B. Navigationsdaten zur Markierung von Ortsein- und ausgängen etc., ein Steuersignal an eine zugeordnete Elektronikeinheit zu senden, nach Maßgabe dessen das Fernlicht automatisch an- und ausschaltbar ist.

Das Kraftfahrzeug umfasst ein Betätigungselement zur Ansteuerung der Fernlichtfunktionen. Das Betätigungselement kann ein Handbetätigungselement, insbesondere ein Bedienhebel sein. Das Betätigungselement kann im Armaturenbrett angeordnet sein. Gemäß einer besonders bevorzugten Ausführungsform ist das Betätigungselement als Lenkstockschalter, auch als Lenkstockhebel bezeichnet, ausgeführt.

Das Betätigungselement ist ausgehend von einer Neutralstellung in einer ersten Betätigungsrichtung in zwei hintereinanderliegend angeordnete Funktionsstellungen bringbar und kehrt durch Loslassen in seine Neutralstellung zurück. Hierbei ist zum Erreichen der ersten Funktionsstellung eine erste Betätigungskraft erforderlich und zum Erreichen der zweiten Funktionsstellung ein Druckpunkt, insbesondere ein deutlich spürbarer Druckpunkt, durch eine im Vergleich zur ersten Betätigungskraft erhöhte Betätigungskraft zu überwinden. Das Betätigungselement ist ausgehend von der Neutralstellung in der ersten Betätigungsrichtung vorzugsweise lediglich tastend in die zwei hintereinanderliegend angeordneten Funktionsstellungen bringbar, d. h. es gibt in der ersten Betätigungsrichtung nur zwei Schaltstellungen. Bei dem in der ersten Betätigungsrichtung vorhandenen Druckpunkt handelt es sich um einen haptisch spürbaren Anschlagpunkt innerhalb der Bedienungsbewegung des Betätigungselements, an dem der Benutzer einen zusätzlichen Kraftaufwand einsetzen muss, um den Druckpunkt zu überwinden und die Bewegung innerhalb des festgelegten Bereichs zu beenden.

Das Betätigungselement ist ferner ausgehend von einer Neutralstellung in einer zweiten Betätigungsrichtung in eine dritte Funktionsstellung bringbar und kehrt durch Loslassen in seine Neutralstellung zurück. Das Betätigungselement ist ausgehend von der Neutralstellung in der zweiten Betätigungsrichtung vorzugsweise lediglich tastend in die dritte Funktionsstellung bringbar, d. h. es gibt in der ersten Betätigungsrichtung nur eine Schaltstellung des Bedienelements. Die Neutralstellung wird auch als Ausgangsstellung oder Selbstrückholstellung bezeichnet. Die Neutralstellung bzw. Selbstrückholstellung ist somit monostabil, d. h. das Bedienelement springt selbsttätig aus der ersten, zweiten und dritten Funktionsstellung in die Neutralstellung zurück. Die erste und die zweite Betätigungsrichtung sind vorzugsweise zueinander entgegengesetzt, d. h. liegen in einer Ebene. Beispielsweise kann die erste Betätigungsrichtung von einer Instrumententafel des Kraftfahrzeugs weg, d. h. hin zum Fahrer, und die zweite Betätigungsrichtung in Richtung der Instrumententafel, d. h. weg vom Fahrer, zeigen.

Erfindungsgemäß werden die Fernlichtfunktionen in Abhängigkeit einer Betätigung des Betätigungselements derart angesteuert, dass in der ersten Funktionsstellung eine Lichthupenfunktion aktiviert wird, in der zweiten Funktionsstellung eine Dauerfernlichtfunktion ein- und ausschaltbar ist und in der dritten Funktionsstellung eine Fernlichtautomatikfunktion aktivierbar und deaktivierbar ist. Ist die Fernlichtautomatikfunktion aktiviert, erfolgt ein automatisches Ein- und Ausschalten des Fernlichts, wie zuvor beschrieben, z. B. in Abhängigkeit vom Umgebungslicht. Hierbei ist die Bedienung der Fernlichtautomatik und die manuelle Bedienung des Dauerfernlichts vorzugsweise unabhängig voneinander, derart, dass keine Wechselwirkungen bestehen, so dass das manuell ein- und ausschaltbare Dauerfernlicht zu jeder Zeit, auch während der aktivierten Fernlichtautomatik, manuell bedienbar ist. Insbesondere kann das Ein- und Ausschalten der Dauerfernlichtfunktion durch Betätigung des Bedienelements in die zweite Funktionsstellung unabhängig davon sein, ob die Fernlichtautomatikfunktion aktiviert oder deaktiviert ist.

Die vorgeschlagene Ansteuerung der Fernlichtfunktionen bietet eine Vielzahl von Vorteilen. Die Ansteuerung aller Fernlichtfunktionen, d. h. manuell einstellbares Dauerfernlicht, Lichthupe und Fernlichtautomatik, ist in nur einem Betätigungselement, z. B. einem Lenkstockschalter, integriert. Betreffend das Abblendlicht ist es dagegen vorteilhaft, dieses über einen separaten Drehschalter zu bedienen. Auf diese Weise werden die Auffindbarkeit und die Interpretierbarkeit der dargestellten Funktionen erleichtert, Fehler vermieden und der Fahrkomfort erhöht. Da für die Ansteuerung der Fernlichtfunktionen nur zwei Betätigungsrichtungen benötigt werden, ist eine Mehrfachbelegung des Bedienelements, z. B. des Lenkstockschalters, mit anderen Funktionen problemlos möglich, z. B. in Betätigungsrichtungen senkrecht zur ersten und zweiten Betätigungsrichtung. Ein weiterer Vorteil ist, dass das tastende Bedienelement, z. B. in Form des tastenden Lenkstockschalters, immer wieder in die Neutralstellung (Ausgangsposition) zurückfällt, was Fehlstellungen verhindert. Derartige Fehlstellungen können bei aus der Praxis bekannten Bedienkonzepten insbesondere dann entstehen, wenn beim Ein- und Ausschalten der Fernlichtautomatik Wechselwirkungen mit der manuellen Bedienung des Fernlichts entstehen. Ein weiterer Vorzug liegt darin, dass der Fahrer eine haptische Rückmeldung seines Bedienvorgangs durch den fühlbaren Druckpunkt bekommt. Anhand dieses Druckpunkts können eine (prinzipiell auch beide) Schaltrichtung(en) doppelt belegt werden. In der vorliegenden Erfindung wird der Unterschied "Lichthupe/Fernlicht", bzw. Fernlichtautomatik also auch fühlbar unterschieden, was Verwechslungen dieser Funktionen vorbeugt. Auch Wechselwirkungen zwischen manueller Bedienung des Fernlichts und der Fernlichtautomatik sind unwahrscheinlich, da die beiden Bedienvorgänge klar voneinander getrennt stattfinden.

Gemäß einem Aspekt der Erfindung wird durch eine Betätigung des Betätigungselements in die erste Betätigungsrichtung bis zum Druckpunkt und ohne diesen zu überschreiten das Fernlicht eingeschaltet. Das Fernlicht bleibt in dieser Stellung des Betätigungselements solange eingeschaltet, wie das Betätigungselement am Druckpunkt gehalten wird. Auf diese Weise wird in der ersten Funktionsstellung die Lichthupenfunktion eingeschaltet.

Dagegen führt eine Betätigung des Betätigungselements in die zweite Funktionsstellung, d. h. der Druckpunkt in der ersten Betätigungsrichtung wird überschritten, dazu, dass die Dauerfernlichtfunktion eingeschaltet wird, falls die Dauerfernlichtfunktion nicht eingeschaltet war, und dass die Dauerfernlichtfunktion ausgeschaltet wird, falls die Dauerfernlichtfunktion eingeschaltet war. Das manuelle Ein- und Ausschalten des Dauerfernlichts erfolgt somit durch den gleichen Bedienvorgang, was für die Bedienperson leicht verständlich ist. Zugleich erfolgt sowohl das manuelle Ein- und Ausschalten der Lichthupe als auch das manuelle Ein- und Ausschalten des Dauerfernlichts durch Bedienvorgänge des Betätigungselements in die gleiche Betätigungsrichtung (Auslenkrichtung). Bei Ausführung als Lenkstockschalter kann diese Betätigungsrichtung einem Ziehen des Lenkstockschalters aus der Neutralstellung hin zum Fahrer bzw. weg von der Instrumententafel des Kraftfahrzeugs entsprechen. Gemäß dieser Ausführungsvariante wird das Ein- und Ausschalten der Fernlichtautomatikfunktion durch ein Drücken des Lenkstockschalters gesteuert.

Ferner kann eine Betätigung des Betätigungselements in die dritte Funktionsstellung dazu führen, dass die Fernlichtautomatikfunktion aktiviert wird, falls die Fernlichtautomatikfunktion nicht aktiviert, d. h. deaktiviert, war und dass die Fernlichtautomatikfunktion deaktiviert wird, falls die Fernlichtautomatikfunktion zuvor aktiviert war. Das Aktivieren und Deaktivieren der Fernlichtautomatikfunktion erfolgt somit durch den gleichen Bedienvorgang, was für die Bedienperson leicht verständlich ist.

Gemäß einem weiteren Aspekt kann sich die dritte Funktionsstellung an einem Anschlag in der zweiten Betätigungsrichtung befinden. Entsprechend kann sich die zweite Funktionsstellung an einem Anschlag in der ersten Betätigungsrichtung befinden. Bei dieser Variante ist es zur Erreichung der zweiten Funktionsstellung nicht ausreichend, den Druckpunkt zu überwinden, sondern zusätzlich muss der Anschlag in der ersten Betätigungsrichtung erreicht werden.

Gemäß einem zweiten Gesichtspunkt der Erfindung wird eine Vorrichtung zur Ansteuerung von Fernlichtfunktionen, insbesondere eine Vorrichtung zur Fernlichtschaltung, eines Kraftfahrzeuges bereitgestellt. Die Vorrichtung umfasst ein Betätigungselement und eine Steuereinrichtung, die ausgebildet ist, in Abhängigkeit von einer erfassten Betätigung des Betätigungselements die Fernlichtfunktionen anzusteuern.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Ausbildung des Betätigungselements und betreffend die Ansteuerung der Fernlichtfunktionen in Abhängigkeit von der Betätigung des Betätigungselements gelten somit auch entsprechend für die Vorrichtung, bei der die Steuereinrichtung entsprechend ausgebildet ist, in Abhängigkeit von einer erfassten Betätigung des Betätigungselements Steuersignale, insbesondere Schaltsignale zur Ansteuerung der Fernlichtfunktionen zu erzeugen. Die Vorrichtung ist somit ausgebildet, das in diesem Dokument beschriebene Verfahren auszuführen.

So ist beispielsweise das Betätigungselement, z. B. ausgeführt als Lenkstockschalter, der Vorrichtung ausgehend von seiner Neutralstellung tastend in einer ersten Betätigungsrichtung in zwei hintereinanderliegend angeordnete Funktionsstellungen bringbar und kehrt durch Loslassen selbsttätig in seine Neutralstellung zurück. Hierbei ist zum Erreichen der ersten Funktionsstellung eine erste Betätigungskraft erforderlich, und zum Erreichen der zweiten Funktionsstellung ist ein Druckpunkt durch eine im Vergleich zur ersten Betätigungskraft erhöhte Betätigungskraft zu überwinden. Ferner ist das Betätigungselement ausgehend von seiner Neutralstellung in einer zweiten Betätigungsrichtung in eine dritte Funktionsstellung bringbar und kehrt durch Loslassen in seine Neutralstellung zurück. Ferner ist die Steuereinrichtung ausgebildet, in Abhängigkeit von einer erfassten Betätigung des Betätigungselements Fernlichtfunktionen des Kraftfahrzeugs anzusteuern, derart, dass in der ersten Funktionsstellung eine Lichthupenfunktion aktiviert wird, dass in der zweiten Funktionsstellung eine Dauerfernlichtfunktion ein- und ausschaltbar ist und dass in der dritten Funktionsstellung eine Fernlichtautomatikfunktion ein- und ausschaltbar ist.

Die Erfindung betrifft ferner ein Kraftfahrzeug, insbesondere ein Nutzfahrzeug, umfassend ein Fernlichtbeleuchtungssystem mit einer Lichthupenfunktion, einer Dauerfernlichtfunktion und einer Fernlichtautomatik, und eine Vorrichtung zur Ansteuerung von Fernlichtfunktionen wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben.

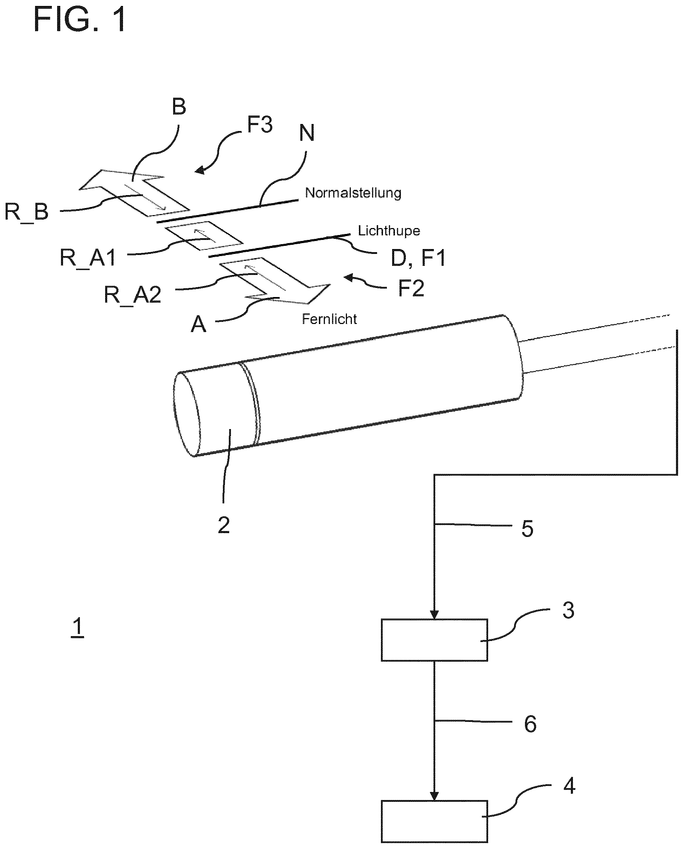

Figur 1 zeigt hierbei schematisch eine Vorrichtung zur Ansteuerung von Fernlichtfunktionen eines Kraftfahrzeugs und illustriert ein Verfahren zur Ansteuerung der Fernlichtfunktionen gemäß einem Ausführungsbeispiel.

Die Vorrichtung 1 zur Ansteuerung von Fernlichtfunktionen des Kraftfahrzeuges, insbesondere zur Fernlichtschaltung umfasst ein Handbetätigungselement 2 zur Ansteuerung der Fernlichtfunktionen, das als Lenkstockschalter ausgeführt ist. Der Lenkstockschalter weist eine monostabile Neutralstellung (Selbstrückholstellung) N auf, aus welcher der Lenkstockschalter in einer Betätigungsrichtung A und in eine hierzu entgegengesetzte Betätigungsrichtung B auslenkbar ist. Vorliegend kann eine Bedienperson durch ein Ziehen den Lenkstockschalter in die Betätigungsrichtung A und durch ein Drücken in die Betätigungsrichtung B kippen. Sobald der ausgelenkte Lenkstockschalter losgelassen wird, federt er selbsttätig zurück in seine Neutralstellung N.

Das Verfahren zur Ansteuerung der Fernlichtfunktionen basierend auf Bedienvorgängen des Lenkstockschalters ist in Figur 1 schematisch durch die möglichen Schaltstellungen F1, F2 und F3 und Auslenkpositionen illustriert.

Der Lenkstockschalter 2 ist ausgehend von seiner Neutralstellung N in der ersten Betätigungsrichtung A lediglich in zwei hintereinanderliegend angeordnete Funktionsstellungen F1, F2 bringbar. Zum Erreichen der ersten Funktionsstellung F1 ist eine erste Betätigungskraft erforderlich, und zum Erreichen der zweiten Funktionsstellung F2 ist ein Druckpunkt D durch eine im Vergleich zur ersten Betätigungskraft erhöhte Betätigungskraft zu überwinden. Die erste Funktionsstellung F1 liegt auf Höhe des Druckpunkts D. Wird der Lenkstockschalter 2 in die erste Funktionsstellung F1 bewegt, wird eine Lichthupenfunktion aktiviert. Dies bedeutet, dass wenn der Lenkstockschalter von einer Bedienperson bis zum Druckpunkt D bewegt wird, dann wird das Fernlicht solange eingeschaltet, wie der Lenkstockschalter am Druckpunkt D gehalten wird. Wird der Lenkstockschalter im Druckpunkt D losgelassen, bewegt er sich selbsttätig zurück in die Neutralstellung und das Fernlicht wird ausgeschaltet. Diese Rückstellbewegung vom Druckpunkt D zur Neutralstellung N ist mit dem Bezugszeichen R_A1 gekennzeichnet. Dies entspricht einer an sich bekannten Bedienlogik für die Lichthupenfunktion.

Wird der Lenkstockhebel dagegen in Betätigungsrichtung A über den Druckpunkt D hinaus bewegt, wird die zweite Funktionsstellung F2 erreicht, in der die Dauerfernlichtfunktion ein- und ausschaltbar ist. Lenkt eine Bedienperson den Lenkstockschalter 2 somit in die zweite Funktionsstellung aus, wird das Dauerfernlicht eingeschaltet, falls es nicht schon eingeschaltet war. Wird der Lenkstockschalter nach Auslenkung in die zweite Funktionsstellung losgelassen, federt er zurück in die Neutralstellung, wobei das Dauerfernlicht eingeschaltet bleibt. Lenkt eine Bedienperson den Lenkstockschalter 2 jedoch bei bereits eingeschaltetem Dauerfernlicht in die zweite Funktionsstellung aus, wird das Dauerfernlicht ausgeschaltet. Auch hier federt der Lenkstockschalter nach dem Loslassen zurück in die Neutralstellung, wobei das Dauerfernlicht ausgeschaltet bleibt. Diese Rückstellbewegung aus der Funktionsstellung F2 zurück zur Neutralstellung N ist mit dem Bezugszeichen R_A2 gekennzeichnet.

Zur Steuerung der Fernlichtautomatikfunktion muss der Lenkstockschalter dagegen in Betätigungsrichtung B bewegt werden, wodurch die dritte Funktionsstellung erreicht wird. Wird beispielsweise der Lenkstockschalter 2 ausgehend von seiner Neutralstellung N in die dritte Funktionsstellung ausgelenkt, wird die Fernlichtautomatik entweder aktiviert oder deaktiviert, abhängig davon, ob sie zuvor deaktiviert oder aktiviert war. So wird die Fernlichtautomatikfunktion in der dritten Funktionsstellung aktiviert, falls die Fernlichtautomatikfunktion nicht aktiviert war, und deaktiviert, falls die Fernlichtautomatikfunktion aktiviert war. Die selbsttätige Rückstellbewegung aus der dritten Funktionsstellung F3 zur Neutralstellung N ist mit dem Bezugszeichen R_B gekennzeichnet.

Zur Ansteuerung der Fernlichtfunktionen kann der Lenkstockschalter 2 somit in drei Schaltstellungen F1, F2 und F3 sowie in die Neutralstellung N gebracht werden. Zur Erzeugung der zuvor beschriebenen Ansteuersignale, z. B. in Form von Schaltsignalen, für die Fernbeleuchtungsvorrichtung des Kraftfahrzeugs, weist die Vorrichtung 1 eine Steuereinrichtung 3 auf, die in signaltechnischer Wirkverbindung mit dem Lenkstockschalter 2 steht, z. B. über eine Steuerleitung 5 oder einen Datenbus. Die Steuereinrichtung 3 ist ausgebildet, in Abhängigkeit von einer erfassten Betätigung des Lenkstockschalters 2 Steuersignale zu erzeugen, um die Fernbeleuchtungsvorrichtung zur Auswahl und Einstellung der Fernlichtfunktionen anzusteuern. Hierzu steht die Steuereinrichtung 3 in signaltechnischer Wirkverbindung, z. B. über eine Steuerleitung 6 oder ein Datenbus, mit einer Fernbeleuchtungsvorrichtung 4 des Kraftfahrzeugs. Die Steuereinrichtung 4 kann als Elektronikeinheit in den Lenkstockschalter 2 baulich integriert sein, kann als separate Steuereinheit vorgesehen sein oder programmtechnisch als Teil einer weiteren Fahrzeugsteuereinheit ausgeführt sein.

Realisierungen der verschiedenen elektromechanischen Details von Lenkstockschalterfunktionen, wie Selbstrückholstellungen oder Druckpunkte, sind an sich aus dem Stand der Technik bekannt und müssen hier nicht näher beschrieben werden. Lediglich beispielhaft wird für derartige Funktionen auf folgenden Schriften verwiesen, die entsprechende Details enthalten: DE 196 22 493 C2, DE 42 26 506 A1 und EP 645 280 B1. Letztere beschreibt die mechanische und elektronische Realisierung eines Lenkstockschalters, mit dem mehrere Funktionen eines Kraftfahrzeugs, wie z. B. Fahrtrichtungsanzeige, Fern- und Abblendlichtumschaltung, Lichthupe, Scheibenwischer und Scheibenwaschanlage, gesteuert werden können. Der Lenkstockschalter besitzt ein seitlich an der Lenksäule befestigtes Gehäuse, von dem der eigentliche Schalthebel abgeht. Der Schalthebel ist in mehreren Ebenen bewegbar und steht mit im Gehäuse befindlichen Schaltelementen in Wirkverbindung, so dass bei Bewegung des Schalthebels in einer der Ebenen die zugehörigen Schaltelemente betätigt werden. Die von den Schaltelementen abgegebenen Signale werden von einem Bus an entsprechende Steuergeräte oder Anzeigeinstrumente zur weiteren Verarbeitung weitergeleitet.

Schließlich kann die Vorrichtung zur Ansteuerung von Fernlichtfunktionen noch eine Anzeigeeinrichtung (nicht dargestellt) zum Anzeigen des Aktivierungszustands der Automatikfunktion, nämlich ob diese aktiviert ist oder deaktiviert ist und zur Anzeige, ob das Dauerfernlicht manuell eingeschaltet ist oder nicht, vorgesehen sein. Die Anzeigevorrichtung steht ebenfalls in signaltechnischer Wirkverbindung mit der Steuereinrichtung 3. Auf diese Weise erhält die Bedienperson Informationen dahingehend, ob die Fernlichtautomatik oder das manuelle Dauerfernlicht momentan ein- oder ausgeschaltet ist. Diese Anzeigeeinrichtung kann den Fernlichtzustand auf einem Bildschirm einer Instrumententafel bzw. einem Kombiinstrument anzeigen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Vorrichtung zur Ansteuerung von Fernlichtfunktionen des Kraftfahrzeugs
- 2: Betätigungselement, z. B. Lenkstockschalter
- 3: Steuereinrichtung
- 4: Fernbeleuchtungsvorrichtung
- 5, 6: Signalleitung und/oder Datenbus
- A: Erste Betätigungsrichtung
- B: Zweite Betätigungsrichtung
- N: Neutralstellung
- D: Druckpunkt
- F1: Erste Funktionsstellung
- F2: Zweite Funktionsstellung
- F3: Dritte Funktionsstellung
- R_A1: Rückstellbewegung zur Neutralstellung
- R_A2: Rückstellbewegung zur Neutralstellung
- R_B: Rückstellbewegung zur Neutralstellung

## Patentansprüche

1. Verfahren zur Ansteuerung von Fernlichtfunktionen eines Kraftfahrzeuges, umfassend ein Betätigungselement (2) zur Ansteuerung der Fernlichtfunktionen,
a) wobei das Betätigungselement ausgehend von seiner Neutralstellung (N)
a1) in einer ersten Betätigungsrichtung (A) in zwei hintereinanderliegend angeordnete Funktionsstellungen (F1, F2) bringbar ist und durch Loslassen in seine Neutralstellung (N) zurückkehrt, wobei zum Erreichen der ersten Funktionsstellung (F1) eine erste Betätigungskraft erforderlich ist, und zum Erreichen der zweiten Funktionsstellung ein Druckpunkt (D) durch eine im Vergleich zur ersten Betätigungskraft erhöhte Betätigungskraft zu überwinden ist; und
a2) in einer zweiten Betätigungsrichtung (B) in eine dritte Funktionsstellung (F3) bringbar ist und durch Loslassen in seine Neutralstellung (N) zurückkehrt;
b) wobei die Fernlichtfunktionen in Abhängigkeit einer Betätigung des Betätigungselements (2) derart angesteuert werden,
b1) dass in der ersten Funktionsstellung (F1) eine Lichthupenfunktion aktiviert wird,
b2) dass in der zweiten Funktionsstellung (F2) eine Dauerfernlichtfunktion ein- und ausschaltbar ist, und
b3) dass in der dritten Funktionsstellung (F3) eine Fernlichtautomatikfunktion aktivierbar und deaktivierbar ist.

2. Verfahren nach einem der vorhergehenden Ansprüche, wobei das Betätigungselement (2) ein Lenkstockschalter ist.

3. Verfahren nach einem der vorhergehenden Ansprüche, wobei durch eine Betätigung des Betätigungselements (2) in die erste Betätigungsrichtung (A) bis zum Druckpunkt (D) das Fernlicht eingeschaltet wird und solange eingeschaltet bleibt, wie das Betätigungselement (2) am Druckpunkt (D) gehalten wird.

4. Verfahren nach einem der vorhergehenden Ansprüche, wobei eine Betätigung des Betätigungselements (2) in die zweite Funktionsstellung (F2) dazu führt,
a) dass die Dauerfernlichtfunktion eingeschaltet wird, falls die Dauerfernlichtfunktion nicht eingeschaltet war, und
b) dass die Dauerfernlichtfunktion ausgeschaltet wird, falls die Dauerfernlichtfunktion eingeschaltet war.

5. Verfahren nach einem der vorhergehenden Ansprüche, wobei eine Betätigung des Betätigungselements (2) in die dritte Funktionsstellung (F3) dazu führt,
a) dass die Fernlichtautomatikfunktion aktiviert wird, falls die Fernlichtautomatikfunktion nicht aktiviert war, und
b) dass die Fernlichtautomatikfunktion deaktiviert wird, falls die Fernlichtautomatikfunktion aktiviert war.

6. Verfahren nach einem der vorhergehenden Ansprüche, wobei
a) die erste und die zweite Betätigungsrichtung (A, B) zueinander entgegengesetzt sind, und/oder
b) die erste Betätigungsrichtung (A) von einer Instrumententafel des Kraftfahrzeugs weg und die zweite Betätigungsrichtung (B) in Richtung der Instrumententafel zeigt.

7. Verfahren nach einem der vorhergehenden Ansprüche, wobei das Ein- und Ausschalten der Dauerfernlichtfunktion durch Betätigung des Bedienelements in die zweite Funktionsstellung unabhängig davon ist, ob die Fernlichtautomatikfunktion aktiviert oder deaktiviert ist.

8. Verfahren nach einem der vorhergehenden Ansprüche, wobei sich die dritte Funktionsstellung (F3) an einem Anschlag in der zweiten Betätigungsrichtung befindet.

9. Vorrichtung (1) zur Ansteuerung von Fernlichtfunktionen eines Kraftfahrzeuges, umfassend ein Betätigungselement (2) zur Ansteuerung der Fernlichtfunktionen, **dadurch gekennzeichnet, dass**:
a1) das Betätigungselement ausgehend von seiner Neutralstellung (N) in einer ersten Betätigungsrichtung (A) in zwei hintereinanderliegend angeordnete Funktionsstellungen (F1, F2) bringbar ist und durch Loslassen in seine Neutralstellung (N) zurücckehrt, wobei zum Erreichen der ersten Funktionsstellung (F1) eine erste Betätigungskraft erforderlich ist, und zum Erreichen der zweiten Funktionsstellung (F2) ein Druckpunkt (D) durch eine im Vergleich zur ersten Betätigungskraft erhöhte Betätigungskraft zu überwinden ist;
a2) das Betätigungselement (2) ausgehend von seiner Neutralstellung (N) in einer zweiten Betätigungsrichtung (B) in eine dritte Funktionsstellung (F3) bringbar ist und durch Loslassen in seine Neutralstellung (N) zurückkehrt; und die Vorrichtung eine Steuereinrichtung (3) umfasst, die ausgebildet ist, in Abhängigkeit von einer erfassten Betätigung des Betätigungselements (2) Fernlichtfunktionen des Kraftfahrzeugs anzusteuern, derart,
b1) dass in der ersten Funktionsstellung (F1) eine Lichthupenfunktion aktiviert wird,
b2) dass in der zweiten Funktionsstellung (F2) ein Dauerfernlichtfunktion ein- und ausschaltbar ist, und
b3) dass in der dritten Funktionsstellung (F3) eine Fernlichtautomatikfunktion ein- und ausschaltbar ist.

10. Vorrichtung (1) nach Anspruch 9, **dadurch gekennzeichnet,**
a) **dass** die Vorrichtung ausgeführt ist, das Verfahren nach einem der Ansprüche 2 bis 8 auszuführen, und/oder
b) **dass** das Betätigungselement (2) ein Lenkstockschalter ist.

11. Kraftfahrzeug, umfassend ein Fernlichtbeleuchtungssystem (4) mit einer Lichthupenfunktion, einer Dauerfernlichtfunktion und einer Fernlichtautomatik, und eine Vorrichtung (1) nach Anspruch 9 oder 10.

## Claims

1. A method for controlling full-beam functions of a motor vehicle, comprising an actuating element (2) for controlling the full-beam functions,
a) wherein the actuating element is able to be brought, starting from its neutral position (N),
a1) in a first actuating direction (A) into two function positions (F1, F2) arranged one behind the other and returns to its neutral position (N) when it is released, wherein a first actuating force is required to reach the first function position (F1) and a pressure point (D) must be overcome by an actuating force that is higher than the first actuating force to reach the second function position; and
a2) in a second actuating direction (B) into a third function position (F3) and returns to its neutral position (N) when it is released;
b) wherein the full-beam functions are controlled, in dependence on an actuation of the actuating element (2), such
b1) that a light flasher function is activated in the first function position (F1),
b2) that a permanent full-beam function is able to be switched on and off in the second function position (F2), and
b3) that a full-beam automatic function is able to be activated and deactivated in the third function position (F3) .

2. The method according to the preceding claim, wherein the actuating element (2) is a steering column stalk switch.

3. The method according to either of the preceding claims, wherein, by actuating the actuating element (2) in the first actuating direction (A) up to the pressure point (D), the full-beam is switched on and remains switched on for as long as the actuating element (2) is held at the pressure point (D).

4. The method according to one of the preceding claims, wherein actuation of the actuating element (2) into the second function position (F2) causes
a) the permanent full-beam function to be switched on if the permanent full-beam function was not already switched on, and
b) the permanent full-beam function to be switched off if the permanent full-beam function was switched on.

5. The method according to one of the preceding claims, wherein actuation of the actuating element (2) into the third function position (F3) causes
a) the full-beam automatic function to be activated if the full-beam automatic function was not already activated, and
b) the full-beam automatic function to be deactivated if the full-beam automatic function was activated.

6. The method according to one of the preceding claims, wherein
a) the first and the second actuating directions (A, B) run opposite one another, and/or
b) the first actuating direction (A) points away from a dashboard of the motor vehicle and the second actuating direction (B) points in the direction of the dashboard.

7. The method according to one of the preceding claims, wherein switching the permanent full-beam function on and off by actuating the operating element into the second function position is independent of whether the full-beam automatic function is activated or deactivated.

8. The method according to one of the preceding claims, wherein the third function position (F3) is situated at a stop in the second actuating direction.

9. An apparatus (1) for controlling full-beam functions of a motor vehicle, comprising an actuating element (2) for controlling the full-beam functions, **characterized in that**:
a1) the actuating element is able to be brought, starting from its neutral position (N), in a first actuating direction (A) into two function positions (F1, F2) that are arranged one behind the other and returns to its neutral position (N) when it is released, wherein a first actuating force is required to reach the first function position (F1) and a pressure point (D) must be overcome by an actuating force that is higher than the first actuating force to reach the second function position (F2); and
a2) the actuating element (2) is able to be brought, starting from its neutral position (N), in a second actuating direction (B) into a third function position (F3) and returns to its neutral position (N) when it is released; and
the apparatus comprises a control device (3), which is configured to control, in dependence on a captured actuation of the actuating element (2), full-beam functions of the motor vehicle such
b1) that a light flasher function is activated in the first function position (F1),
b2) that a permanent full-beam function is able to be switched on and off in the second function position (F2), and
b3) that a full-beam automatic function is able to be switched on and off in the third function position (F3).

10. The apparatus (1) according to Claim 9, **characterized**
a) **in that** the apparatus is configured to perform the method according to one of Claims 2 to 8, and/or
b) **in that** the actuating element (2) is a steering column stalk switch.

11. A motor vehicle, comprising a full-beam illumination system (4) having a light flasher function, a permanent full-beam function and a full-beam automatic function, and an apparatus (1) according to Claim 9 or 10.

## Revendications

1. Procédé de commande des fonctions de feux de route d'un véhicule automobile, comprenant un élément d'actionnement (2) pour la commande des fonctions de feux de route
a) dans lequel l'élément d'actionnement, à partir de sa position neutre (N),
a1) peut être amené, dans une première direction d'actionnement (A), à deux positions fonctionnelles (F1, F2) disposées l'une derrière l'autre et revenir à sa position neutre (N) lorsqu'il est relâché, dans lequel une première force d'actionnement est nécessaire pour atteindre la première position fonctionnelle (F1), et un point de pression (D) doit être surmonté par une force d'actionnement accrue par rapport à la première force d'actionnement pour atteindre la deuxième position fonctionnelle ; et
a2) peut être amené, dans une deuxième direction d'actionnement (B), à une troisième position fonctionnelle (F3) et revient à sa position neutre (N) lorsqu'il est relâché ;
b) dans lequel les fonctions de feux de route sont commandées en fonction d'un actionnement de l'élément de commande (2) de telle sorte
b1) qu'à la première position fonctionnelle (F1), une fonction de clignotement des phares est activée,
b2) qu'à la deuxième position fonctionnelle (F2), une fonction de feux de route continus peut être activée et désactivée, et
b3) qu'à la troisième position fonctionnelle (F3), une fonction automatique de feux de route peut être activée et désactivée.

2. Procédé selon l'une des revendications précédentes, dans lequel l'élément d'actionnement (2) est un commutateur de colonne de direction.

3. Procédé selon l'une des revendications précédentes, dans lequel, en actionnant l'élément d'actionnement (2) dans la première direction d'actionnement (A) jusqu'au point de pression (D), le feu de route est allumé et reste allumé aussi longtemps que l'élément d'actionnement (2) est maintenu au point de pression (D).

4. Procédé selon l'une des revendications précédentes, dans lequel l'actionnement de l'élément d'actionnement (2) à la deuxième position fonctionnelle (F2) a pour résultat
a) que la fonction de feux de route continus est activée si la fonction de feux de route continus n'était pas activée, et
b) que la fonction de feux de route continus est désactivée si la fonction de feux de route continus était activée.

5. Procédé selon l'une des revendications précédentes, dans lequel l'actionnement de l'élément d'actionnement (2) à la troisième position fonctionnelle (F3) a pour résultat
a) que la fonction automatique de feux de route est activée si la fonction automatique de feux de route n'était pas activée ; et
b) que la fonction automatique de feux de route est désactivée si la fonction automatique de feux de route était activée.

6. Procédé selon l'une des revendications précédentes, dans lequel
a) les première et seconde directions d'actionnement (A, B) sont opposées l'une à l'autre, et/ou
b) la première direction d'actionnement (A) est orientée dans la direction opposée au tableau de bord du véhicule automobile et la deuxième direction d'actionnement (B) est orientée vers le tableau de bord.

7. Procédé selon l'une des revendications précédentes, dans lequel l'activation et la désactivation de la fonction de feux de route continus par actionnement de l'élément de commande à la deuxième position fonctionnelle est indépendante du fait que la fonction automatique de feux de route soit activée ou désactivée.

8. Procédé selon l'une des revendications précédentes, dans lequel la troisième position fonctionnelle (F3) se trouve en butée dans la deuxième direction d'actionnement.

9. Dispositif (1) de commande des fonctions de feux de route d'un véhicule automobile, comprenant un élément d'actionnement (2) pour la commande des fonctions de feux de route,
**caractérisé en ce que** :
a1) à partir de sa position neutre (N), l'élément d'actionnement peut être amené, dans une première direction d'actionnement (A), à deux positions fonctionnelles (F1, F2) disposées l'une derrière l'autre et revenir à sa position neutre (N) lorsqu'il est relâché, dans lequel une première force d'actionnement est nécessaire pour atteindre la première position fonctionnelle (F1), et un point de pression (D) doit être surmonté par une force d'actionnement accrue par rapport à la première force d'actionnement pour atteindre la deuxième position fonctionnelle (F2) ;
a2) à partir de sa position neutre (N), l'élément d'actionnement (2) peut être amené, dans une deuxième direction d'actionnement (B), à une troisième position fonctionnelle (F3) et revenir à sa position neutre (N) lorsqu'il est relâché ; et
le dispositif comprend un dispositif de commande (3) qui est conçu pour commander les fonctions de feux de route du véhicule automobile en fonction d'un actionnement détecté de l'élément d'actionnement (2), de telle sorte
b1) qu'à la première position fonctionnelle (F1), une fonction de clignotement des phares est activée,
b2) qu'à la deuxième position fonctionnelle (F2), une fonction de feux de route continus peut être activée et désactivée, et
b3) qu'à la troisième position fonctionnelle (F3), une fonction automatique de feux de route peut être activée et désactivée.

10. Dispositif (1) selon la revendication 9, **caractérisé**
a) **en ce que** l'appareil est conçu pour mettre en œuvre le procédé selon l'une des revendications 2 à 8 ; et/ou
b) **en ce que** l'élément d'actionnement (2) est un commutateur de colonne de direction.

11. Véhicule automobile comprenant un système d'éclairage de feux de route (4) ayant une fonction de clignotement des phares, une fonction de feux de route continus et une fonction automatique de feux de route, et un dispositif (1) selon la revendication 9 ou 10.
